Europäisches Patentamt

European Patent Office

Office européen des brevets

(11) Publication number: **0 461 284 A1**

# EUROPEAN PATENT APPLICATION

(21) Application number: 90111196.3

(22) Date of filing: **13.06.90**

(51) Int. Cl.⁵: **A23G 9/00, A23G 9/02, A23L 1/10**

(43) Date of publication of application:
**18.12.91 Bulletin 91/51**

(84) Designated Contracting States:
**DE FR GB IT**

(71) Applicant: **BIZAN PHARMACEUTICALS CO., LTD.**
**40, Okinohama-higashi 2-chome**
**Tokushima-shi(JP)**

(72) Inventor: **Takehisa, Yozo**
**32-5, Nakatsuura, Hachimancho**
**Tokushima-shi(JP)**
Inventor: **Hamada, Yasuhiro**
**1207-14, Singai, Minami-nikenyacho**
**Tokushima-shi(JP)**

(74) Representative: **Brauns, Hans-Adolf, Dr. rer. nat. et al**
**Hoffmann, Eitle & Partner, Patentanwälte**
**Arabellastrasse 4**
**W-8000 München 81(DE)**

(54) **Frozen desserts containing rice.**

(57) A frozen dessert containing rice, such as rice ice cream, rice sherbet, etc. comprising 50 to 99% by weight of compounding ingredients for the frozen dessert and 1 to 50% by weight of pasty rice in alpha-starch form. A method of producing a frozen dessert containing rice which comprises : grinding rice in a powder form, heating the powder rice with water to make pasty rice, mixing the pasty rice with compounding ingredients for the frozen dessert and freezing the resulting mixture.

EP 0 461 284 A1

Frozen desserts, typically ice cream is generally produced by mixing and homogenizing various ingredients (except a flavoring material), namely, a dairy product (e.g. milk, cream), a sweetening agent (e.g. sugar), a stabilizer (e.g. gelatin, CMC), an emulsifier (e.g. mono- or diglyceride), egg, etc. and thereafter incorpcrating the flavoring material such as vanilla, chocolate, cocoa, coffee, fruits (e.g. strawberries, peaches, oranges, grapes), spices (e.g. peppermint), nuts (e.g. almond), etc. followed by freezing. A wide variety of ice creams are thus produced and commercially available depending upon the kind of flavoring materials and the content of total milk solids.

Heretofore, in spite of such variety and popularity of ice cream and other frozen desserts, any frozen dessert containing rice or vegetables has never been provided. From the aspect of food life, it is proved that excess consumption of animal foods such as meats, oils and fats, dairy products, etc. is likely to cause adult diseases and the increase of the consumption of fibrous foods and starchy foods including rice is preferable and recommended, instead. Above all, rice is in a glut and has a superior balanced nutritive composition, namely in its carbohydrates, protein, vitamins, etc. so that its increased consumption is desired.

Taking note of the circumstances, the present inventors have found out that rice is feasible as a novel flavoring material for ice cream and other frozen desserts, and accordingly, this invention is designed to develop a new kind of frozen desserts having a novel flavor.

A primary object of this invention is to provide frozen desserts containing rice and its production method which permit to furnish bedridden sick persons or old persons having a poor appetite and growing infants as well as hospitalized patients who eat mainly fluid diet with their nutrition.

Another object of this invention is to provide frozen desserts containing rice and their production method thereby to expedite increased consumption of rice.

Further object of this invention is to provide a dietetic frozen dessert such as sherbet containing rice.

Other objects and advantages of this invention will be apparent from the description given below.

In order to fulfill the foregoing objects, this invention consists in frozen desserts containing rice which comprises 50 to 99 % by weight of ingredients for a frozen dessert and 1 to 50% by weight of rice in its alpha-starch form. Further, this invention provides a method of producing a frozen dessert containing rice which comprises grinding rice in a powder form, heating the powder rice with water to make a pasty rice and simultaneously to convert its beta-starch into alpha-starch, mixing the pasty rice with compounding ingredients for the frozen dessert, and freezing the resulting mixture.

Frozen desserts include ice cream, sherbet, frozen yogurt, etc.

The term "ice cream" used herein is intended to signify, in a broad sense, all kinds of ice creams containing any percentage of total milk solids, namely, these containing total milk solids content of : 5 to 10% (called "lacto-ice"), 10 to 15% (called "ice milk"), less than 5% (called "ice dessert"), and more than 15% (called "ice cream" in a narrow sense).

The compounding ingredients for ice cream to be mixed with the pasty rice are known per se and include a dairy product such as milk, cream, skim milk, condensed milk, evaporated milk, etc.; a sweetening agent such as cane or beet sugar (soft or granulated), dextrose, corn syrup, aspartame, etc.; a stabilizer such as gelatin, sodium alginate, carboxymethylcellulose, etc.; an emulsifier such as mono- and diglycerides; a flavoring material such as vanilla, chocolate, coffee, fruits, etc.; and so on.

According to this invention, it is also possible to incorporate colored vegetables such as pumpkin, sweet potato, spinach, carrot, green pea, etc. together with the pasty rice in an amount of 10 to 40% by weight of the rice.

The pasty rice may be mixed with ice cream mix prepared by mixing, pasteurizing and homogenizing the ice cream ingredients, or may be mingled stepwise, for example, firstly the sweetening agent, whole milk powder and stabilizer and thereafter, cream or milk fat.

The rice paste can be mixed in an amount of 1 to 50% by weight, more preferably, 3 to 10% by weight of the entire mixture for ice cream. With sherbet, 10 to 40% by weight of rice paste can be compounded.

The production method per se of ice cream is known and usually comprises preparing an ice cream mix by mixing, pasteurizing and homogenizing of ice cream ingredients, if necessary, aging the ice cream mix, freezing the mix at -3 to -6°C, during which step, air is incorporated, and hardening the resulting the ice cream in a hardening room.

In the production of other frozen desserts, for example, sherbet, a fruit juice, a sweetening agent such as sugar, milk, egg white or gelatin, etc. are likewise mixed with the rice paste, followed by freezing.

The invention will be hereinafter described by way of non-limitative examples.

Example 1

A 100 quantity of paddy rice (known by the trade name of "Sasanishiki") was ground in a powder form. One day after, the rice powder was incorporated in 500 cc of water and allowed to stand for 30 minutes for swelling.

The powder rice was heated moderately while stirring by means of a whipper and boiled, and the rice became a pasty state. After boiling, the pasty rice was steamed for about 20 to 30 seconds and immediately thereafter 350 g of granulated sugar, 50 g of whole powder milk and 1.5 g of a stabilizer were added to and mixed with the rice paste and the mixture was further extended with 850 cc of milk heated at about 85 °C.

A homogeneous mixture thus prepared was placed in a container and frozen while beating in an ice cream freezer. Thus ice cream having a total milk solids content of 8.2% was yielded, which contains lipid and protein mainly from the ice cream mix and carbohydrates mainly from the rice.

The composition of the rice ice cream was measured in comparison with that of cooked rice, and the results obtained are shown in Table given below.

## Table

| | Amount | Energy | Constituent | | | |
|---|---|---|---|---|---|---|
| | | | Protein | Lipid | Non-fibrous Carbohydrates | Ca |
| | g | kcal | g | g | g | mg |
| Rice ice cream | 100 | 128 | 2.4 | 2.3 | 24.5 | 73 |
| Cooked rice | 100 | 148 | 2.6 | 0.5 | 31.7 | 2 |

The results above indicate that one small cup of rice ice cream (180 cc) has an energy substantially equal to 1 1/2 rice-bowls of cooked rice (corresponding to one meal of staple food). The rice ice cream is palatable, tasting of fresh cooked rice.

In particular, calcium constituent of the rice ice cream is increased as compared with that of cooked rice, and consequently, it is possible to supply growing infants with more calcium constituent than they eat cooked rice, owing to its palatable texture.

Example 2

The same procedure as in Example 1 above was repeated except that 600 g of ice cream mix comprising 30% of sugar, 30% of whole powder milk, 15% of cream (milk fat percentage of 4.5%), 24% of milk and 1% of an emulsifier and vanilla essence was used.

As a result, a rice ice cream having total milk solids content of 20% was obtained.

According to this invention as described above, rice is used as a material for ice cream or other frozen desserts and, in preparing rice ice cream, is ground in a powder form, converted into rice paste by heating with water and then mixed with ice cream ingredients. Thus it is possible to produce rice ice cream or other frozen dessert which is unlike conventional ice creams in taste, flavor and nutritive composition. Hence this invention aids in enlarging acceptable fields of frozen desserts, extending from dietetic desserts for everyone to nourishing substitute meals for patients who eat fluid meal or cannot eat orally and undergo nutritive instillation, bedridden sick persons or old persons having poor appetite, or growing infants, and accordingly, can play a big role in enlarging the consumption of rice.

Furthermore, rice material is comminuted and converted with water to pasty rice (alpha-starch), so that it is possible to mix readily and easily the rice paste with usual ice cream mix or other compounding mixture for frozen desserts, and a great variety of frozen desserts in flavor and taste can be obtained.

## Claims

1. A frozen dessert containing rice comprising 50 to 99% by weight of basic ingredients for the frozen dessert and 1 to 50% by weight of rice paste in alpha-starch form.

2. A frozen dessert of claim 1 which is selected from the group consisting of rice ice cream, rice sherbet and frozen rice yogurt.

3. A method of producing a frozen dessert containing rice which comprises the steps of: grinding rice in a powder form, heating the powder rice with water to make pasty rice, mixing the pasty rice with compounding ingredients for the frozen dessert, and freezing the resulting mixture.

4. The method of producing a frozen dessert containing rice as set forth in claim 3, wherein in the step of mixing the pasty rice with the compounding ingredients, a colored vegetable in a mashed form is incorporated in the pasty rice in an amount of 10 to 40% by weight of the pasty rice.

5. The method of producing a frozen dessert containing rice as set forth in claim 3, which comprises using rice in an amount of 1 to 50% by weight based on the entire mixture of rice and the compounding ingredients.

European
Patent Office

**EUROPEAN SEARCH
REPORT**

Application Number

**EP 90 11 1196**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 6, no. 106 (C-108)(984) 16 June 1982; & JP - A - 5736952 (YOSHIO TANIOKA) 27.02.1982 – – – | 1,3 | A 23 G 9/00 A 23 G 9/02 A 23 L 1/10 |
| X | PATENT ABSTRACTS OF JAPAN vol. 10, no. 28 (C-326)(2085), 4 February 1986; & JP - A - 60180546 (MEIJI NIYUUGIYOU K.K.) 14.09.1985 – – – – – | 1 | |
| | | | **TECHNICAL FIELDS SEARCHED (Int. Cl.5)** |
| | | | A 23 G 9/00 A 23 L 1/00 |

The present search report has been drawn up for all claims

| Place of search | Date of completion of search | Examiner |
|---|---|---|
| Berlin | 05 February 91 | SCHULTZE D |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons
&: member of the same patent family, corresponding document